(19) Europäisches Patentamt
European Patent Office
Office européen des brevets

(11) **EP 4 645 726 A1**

(12) **EUROPEAN PATENT APPLICATION**

(43) Date of publication:
05.11.2025  Bulletin 2025/45

(21) Application number: 25173532.0

(22) Date of filing: 30.04.2025

(51) International Patent Classification (IPC):
*H04L 1/00* (2006.01)   *H04L 1/08* (2006.01)
*H04L 5/00* (2006.01)

(52) Cooperative Patent Classification (CPC):
H04L 1/0075; H04L 1/0041; H04L 1/0045;
H04L 1/0057; H04L 1/0059; H04L 1/08

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 30.04.2024  US 202463640788 P
04.03.2025  US 202519070059

(71) Applicant: Apple Inc.
Cupertino, CA 95014 (US)

(72) Inventors:
• LEE, Wook Bong
  Cupertino, California, 95014 (US)
• WU, Tianyu
  Cupertino, California, 95014 (US)
• ZHANG, Yan
  Cupertino, California, 95014 (US)
• WU, Kanke
  Cupertino, California, 95014 (US)
• BATRA, Anuj
  Cupertino, California, 95014 (US)

(74) Representative: Simmons & Simmons
City Point
One Ropemaker Street
London EC2Y 9SS (GB)

(54) **EXTENDED LONG RANGE PACKET DESIGN AND USE**

(57) This disclosure relates to methods for extended long range packet use in a wireless local area network. An extended long range physical layer protocol data unit can be generated by a wireless device. The extended long range physical layer protocol data unit can include one or more code block repetition and code block repetition signaling information. The extended long range physical layer protocol data unit can be transmitted in a wireless manner.

Establish a wireless link
502

Generate extended long range physical layer protocol data unit including code block repetition signaling information
504

Transmit the extended long range physical layer protocol data unit
506

*FIG. 5*

EP 4 645 726 A1

Description

## TECHNICAL FIELD

The present application relates to wireless communication, including techniques and devices for generating, transmitting, receiving, and decoding extended long-range packets in a wireless local area network architecture.

## DESCRIPTION OF THE RELATED ART

Wireless communication systems are ubiquitous. Further, wireless communication technology has evolved from voice-only communications to also include the transmission of data, such as Internet and multimedia content.

Mobile electronic devices, or stations (STAs) or user equipment devices (UEs), can take the form of smart phones or tablets that a user typically carries. One aspect of wireless communication that can commonly be performed by mobile devices can include wireless networking, for example over a wireless local area network (WLAN), which can include devices that operate according to one or more communication standards in the IEEE 802.11 family of standards.

In a wireless local area network, it can be possible that different devices have different transmit capabilities, and can operate in a variety of conditions, potentially including over a variety of distances. Providing wireless communication system design features that can support wireless devices with varied transmit capabilities, as well as wireless devices that are communicating at longer range, while also providing good throughput and reliability, is an ongoing challenge. Accordingly, improvements in the field are desired.

## SUMMARY

Embodiments are presented herein of, *inter alia*, systems, apparatuses, and methods for devices to generate, transmit, receive, and decode extended long-range packets in a wireless local area network architecture.

A wireless device can include one or more antennas, one or more radios operably coupled to the one or more antennas, and a processor operably coupled to the one or more radios. The wireless device can be configured to establish a connection with an access point through a wireless local area network (WLAN) over one or multiple wireless links, or can be an access point configured to establish a connection with one or more other wireless devices through a WLAN over one or multiple wireless links. The wireless device can operate in each of the multiple wireless links using a respective radio of the one or more radios.

The wireless device can generate an extended long range packet (e.g., physical layer protocol data unit). The packet can include one or more code block repetitions and code block repetition signaling information configured for use by a receiver for combining the code block repetitions and decoding the code block.

Multiple options for handling pre-forward error correction padding as part of the packet generation process are described herein. These options include an approach in which pre-forward error correction padding is omitted (or minimally used), an approach in which pre-forward error correction padding is calculated before code block repetitions are performed, and an approach in which pre-forward error correction padding is calculated after code block repetitions are performed. At least in some embodiments, some differences can be present between types of code block repetition signaling information used for these different approaches.

Techniques are also described herein for providing an early packet classification field in such a packet. Such a field can provide an early indication of basic service set color information for the packet, which can assist wireless devices that are not associated with the basic service set of the packet to terminate packet reception early, at least in some embodiments.

The techniques described herein can be implemented in and/or used with a number of different types of devices, including but not limited to cellular phones, tablet computers, accessory and/or wearable computing devices, portable media players, base stations, access points, and other network infrastructure equipment, servers, unmanned aerial vehicles, unmanned aerial controllers, automobiles and/or motorized vehicles, and any of various other computing devices.

This summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

## BRIEF DESCRIPTION OF THE DRAWINGS

A better understanding of the present subject matter can be obtained when the following detailed description of the embodiments is considered in conjunction with the following drawings.

Figure 1 illustrates an example wireless communication system including a wireless device, according to some embodiments;

Figure 2 is a block diagram illustrating an example wireless device, according to some embodiments;

Figure 3 is a block diagram illustrating an example network element or access point, according to some embodiments;

Figure 4 is a block diagram illustrating an example modem or baseband processor, according to some embodiments;

Figure 5 is a flowchart diagram illustrating an example method for generating and transmitting extended long-range packets in a wireless local area network, according to some embodiments;

Figures 6-9 illustrate example aspects of possible extended long range packet formats, according to some embodiments;

Figures 10-12 illustrate example sequences that could be used for early packet classification in an extended long range packet, according to some embodiments;

Figure 13 illustrates example aspects of a possible extended long range packet encoding and decoding process with code block repetition used, according to some embodiments;

Figure 14 illustrates aspects of an example extended long range packet generated using a code block repetition encoding process in which high efficiency / extremely high throughput pre-forward error correction padding process is not used, according to some embodiments;

Figure 15 illustrates aspects of an example extended long range packet generated using a code block repetition encoding process in which a pre-forward error correction padding factor is determined after forward error correction code bits are repeated using high efficiency / extremely high throughput pre-forward error correction padding process, according to some embodiments; and

Figures 16-17 illustrate aspects of an example extended long range packet generated using a code block repetition encoding process in which a pre-forward error correction padding factor is determined before forward error correction code bits are repeated using high efficiency / extremely high throughput pre-forward error correction padding process, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

## DETAILED DESCRIPTION

### Terminology

The following are definitions of terms used in this disclosure:

Memory Medium - Any of various types of non-transitory memory devices or storage devices. The term "memory medium" is intended to include any computer system memory or random access memory, such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The term "memory medium" can include two or more memory mediums which can reside in different locations, e.g., in different computer systems that are connected over a network. The memory medium can store program instructions (e.g., embodied as computer programs) that can be executed by one or more processors.

Carrier Medium - a memory medium as described above, as well as a physical transmission medium, such as a bus, network, and/or other physical transmission medium that conveys signals such as electrical, electromagnetic, or digital signals.

Computer System - any of various types of computing or processing systems, including a personal computer system (PC), server-based computer system, wearable computer, network appliance, Internet appliance, smartphone, television system, grid computing system, or other device or combinations of devices. In general, the term "computer system" can be broadly defined to encompass any device (or combination of devices) having at least one processor that executes instructions from a memory medium.

User Equipment (UE) (or "UE Device") - any of various types of computer systems or devices that are mobile or portable, and that perform wireless communications. Examples of UE devices include mobile telephones or smart phones (e.g., iPhone™, Android™-based phones), tablet computers, portable gaming devices, laptops, wearable devices (e.g., smart watch, smart glasses, smart goggles, head-mounted display devices, and so forth), portable Internet devices, music players, data storage devices, or other handheld devices, automobiles and/or motor vehicles, unmanned aerial vehicles (UAVs) (e.g., drones), UAV controllers (UACs), etc. In general, the term "UE" or "UE device" can be broadly defined to encompass any electronic, computing, and/or telecommunications device (or combination of devices) which is easily transported by a user and capable of wireless communication.

**Wireless Device or Station (STA)** - any of various types of computer systems or devices that perform wireless communications. A wireless device can be portable (or mobile), or can be stationary or fixed at a certain location. The terms "station" and "STA" are used similarly. A UE is an example of a wireless device.

**Communication Device** - any of various types of computer systems or devices that perform communications, where the communications can be wired or wireless. A communication device can be portable (or mobile) or can be stationary or fixed at a certain location. A wireless device is an example of a communication device. A UE is another example of a communication device.

**Base Station or Access Point (AP)** - The term "Base Station" has the full breadth of its ordinary meaning, and at least includes a wireless communication station installed at a fixed location and used to communicate as part of a wireless communication system. The term "access point" (or "AP") is typically associated with Wi-Fi-based communications and is used similarly.

**Processing Element (or Processor)** - refers to various elements or combinations of elements that are capable of performing a function in a device, e.g., in a communication device or in a network infrastructure device. Processors can include, for example: processors and associated memory, circuits such as an ASIC (Application Specific Integrated Circuit), portions or circuits of individual processor cores, entire processor cores, processor arrays, programmable hardware devices such as a field programmable gate array (FPGA), and/or larger portions of systems that include multiple processors, as well any of various combinations of the above.

**IEEE 802.11** - refers to technology based on IEEE 802.11 wireless standards such as 802.11a, 802.11b, 802.11g, 802.11n, 802.11-2012, 802.11ac, 802.11ad, 802.11ax, 802.11ay, 802.11be, and/or other IEEE 802.11 standards. IEEE 802.11 technology can also be referred to as "Wi-Fi" or "wireless local area network (WLAN)" technology.

**Configured to** - Various components can be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors can be configured to electrically connect a module to another module, even when the two modules are not connected). In some contexts, "configured to" can be a broad recitation of structure generally meaning "having circuitry that" performs the task or tasks during operation. As such, the component can be configured to perform the task even when the component is not currently on. In general, the circuitry that forms the structure corresponding to "configured to" can include hardware circuits.

Various components can be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

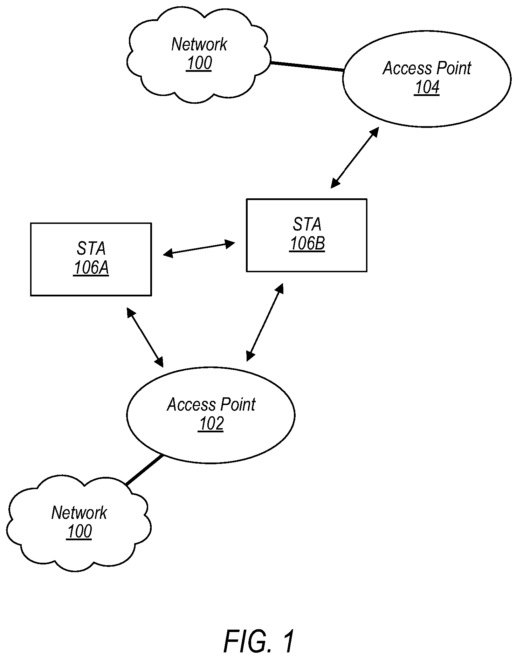

Figures 1-2 - Wireless Communication System

Figure 1 illustrates an example of a wireless communication system. It is noted that Figure 1 represents one possibility among many, and that features of the present disclosure can be implemented in any of various systems, as desired. For example, instances described herein can be implemented in any type of wireless device. The wireless communication system described below is one example.

As shown, the exemplary wireless communication system includes an access point (AP) 102, which communicates over a transmission medium with one or more wireless devices 106A, 106B, etc. Wireless devices 106A and 106B can be user devices, such as stations (STAs), non-AP STAs, UEs, or WLAN devices.

The STA 106 can be a device with wireless network connectivity such as a mobile phone, a hand-held device, a wearable device (e.g., such as a smart watch, smart glasses, and/or a head-mounted display device), a computer or a tablet, an unmanned aerial vehicle (UAV), an unmanned aerial controller (UAC), an automobile, or virtually any type of wireless device. The STA 106 can include a processor (processing element) that is configured to execute program instructions stored in memory. The STA 106 can perform any of the methods described herein by executing such stored instructions. Alternatively, or in addition, the STA 106 can include a programmable hardware element such as an FPGA (field-programmable gate array), an integrated circuit, and/or any of various other possible hardware components that are configured to perform (e.g., individually or in combination) any of the methods described herein, or any portion of any of the methods described herein.

The AP 102 can be a stand-alone AP or an enterprise AP, can be a base transceiver station (BTS) or cell site, and can include hardware that enables wireless communication with the STA devices 106A and 106B. The AP 102 can also be equipped to communicate with a network 100 (e.g., a core network of a service provider (e.g., a cellular service provider, an Internet service provider, and/or a carrier), a WLAN, an enterprise network, and/or another communication network connected to the Internet, among various possibilities). Thus, the AP 102 can facilitate communication among the STA devices 106 and/or between the STA devices 106 and the network 100. AP 102 can be configured to provide communications over one or more wireless technologies, such as any, any combination of, and/or all of 802.11 a, b, g, n, ac, ad, ax, ay, be and/or other 802.11 versions, and/or a cellular protocol, such as 6G, 5G and/or LTE, including in an unlicensed band.

The communication area (or coverage area) of the AP 102 can be referred to as a basic service area (BSA) or cell. The AP 102 and the STAs 106 can be configured to communicate over the transmission medium using any of various radio access technologies (RATs) or wireless communication technologies, such as Wi-Fi, LTE, LTE-Advanced (LTE-A), 5G NR, 6G, ultra-wideband (UWB), etc.

AP 102 and other similar access points (not shown) operating according to one or more wireless communication technologies can thus be provided as a network, which can provide continuous or nearly continuous overlapping service to STA devices 106A-B and similar devices over a geographic area, e.g., via one or more communication technologies. A STA can roam from one AP to another AP directly, or can transition between APs and/or network cells (e.g., such as cellular network cells).

Note that at least in some instances a STA device 106 can be capable of communicating using any of multiple wireless communication technologies. For example, a STA device 106 might be configured to communicate using Wi-Fi, LTE, LTE-A, 5G NR, 6G, Bluetooth, UWB, one or more satellite systems, etc. Other combinations of wireless communication technologies (including more than two wireless communication technologies) are also possible. Likewise, in some instances a STA device 106 can be configured to communicate using only a single wireless communication technology.

As shown, the exemplary wireless communication system can also include an access point (AP) 104, which communicates over a transmission medium with the wireless device 106B. The AP 104 also provides communicative connectivity to the network 100. Thus, wireless devices can connect to either or both of AP 102 (or another cellular base station) and the access point 104 (or another access point) to access the network 100. For example, a STA can roam from AP 102 to AP 104 based on one or more factors, such as coverage, interference, and capabilities. Note that it can also be possible for the AP 104 to provide access to a different network (e.g., an enterprise Wi-Fi network, a home Wi-Fi network, etc.) than the network to which the AP 102 provides access.

The STAs 106A and 106B can include handheld devices such as smart phones or tablets, wearable devices such as smart watches, smart glasses, head-mountable display devices, and/or can include any of various types of devices with wireless communication capability. For example, one or more of the STAs 106A and/or 106B can be a wireless device intended for stationary or nomadic deployment such as an appliance, measurement device, control device, etc.

The STA 106B can also be configured to communicate with the STA 106A. For example, the STA 106A and STA 106B can be capable of performing direct device-to-device (D2D) communication. Note that such direct communication between STAs can also or alternatively be referred to as peer-to-peer (P2P) communication. The direct communication can be supported by the AP 102 (e.g., the AP 102 can facilitate discovery, among various possible forms of assistance), or can be performed in a manner unsupported by the AP 102. Such P2P communication can be performed using 3GPP-based D2D communication techniques, Wi-Fi-based P2P communication techniques, UWB, BT, and/or any of various other direct communication techniques, according to various examples.

The STA 106 can include one or more devices or integrated circuits for facilitating wireless communication, potentially including a Wi-Fi modem, cellular modem, and/or one or more other wireless modems. The wireless modem(s) can include one or more processors (processor elements) and various hardware components as described herein. The STA 106 can perform any of (or any portion of) the methods described herein by executing instructions on one or more programmable processors. For example, the STA 106 can be configured to perform techniques for generating and transmitting, and/or receiving and decoding, extended long-range packets in a wireless communication system, such as according to the various methods described herein. Alternatively, or in addition, the one or more processors can be one or more programmable hardware elements such as an FPGA (field-programmable gate array), application-specific integrated circuit (ASIC), or other circuitry, that is configured to perform any of the methods described herein, or any portion of any of the methods described herein. The wireless modem(s) described herein can be used in a STA device as defined herein, a wireless device as defined herein, or a communication device as defined herein. The wireless modem described herein can also be used in an AP, a base station, a pico cell, a femto cell, and/or other similar network side device.

The STA 106 can include one or more antennas for communicating using two or more wireless communication protocols or radio access technologies. In some instances, the STA device 106 can be configured to communicate using a single shared radio. The shared radio can couple to a single antenna, or can couple to multiple antennas (e.g., for MIMO) for performing wireless communications. Alternatively, the STA device 106 can include two or more radios, each of which can be configured to communicate via a respective wireless link. Other configurations are also possible.

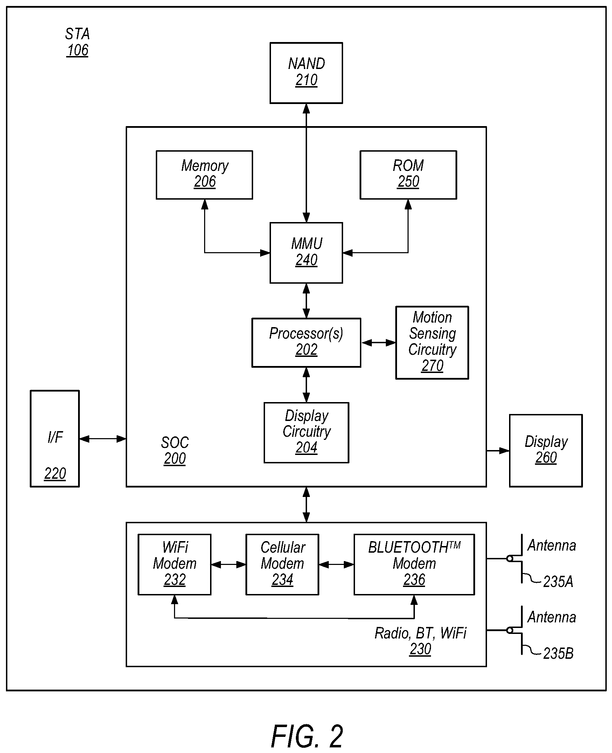

Figure 2 - Example Block Diagram of a STA Device

Figure 2 illustrates an example block diagram of a STA device, such as STA 106. In some instances, the STA 106 can additionally or alternatively be referred to as a UE 106. STA 106 also can be referred to as a non-AP STA 106. As shown, the STA 106 can include a system on chip (SOC) 200, which can include one or more portions configured for various purposes. Some or all of the various illustrated components (and/or other device components not illustrated, e.g., in variations and alternative arrangements) can be "communicatively coupled" or "operatively coupled," which terms can be taken herein to mean components that can communicate, directly or indirectly, when the device is in operation.

In some instances, the STA 106 can be configured as a Multi-Link Device (MLD). In such instances, the STA 106 (e.g., one or more radios of the STA 106) can be configured for concurrent data transmission and reception in multiple channels across a single band and/or multiple frequency bands (e.g., such as a 2.4 GHz band, a 5 GHz band, and/or a 6 GHz band). As such, the STA 106 (e.g., one or more radios of the STA 106) can be configured to perform Multi-Link Operation (MLO). For example, the STA 106 (e.g., one or more radios of the STA 106) can be configured to perform Simultaneous Transmit Receive (STR) operation (e.g., can be configured for simultaneous uplink and downlink traffic on a pair of links) and/or Enhanced Multi-Link Single-Radio (EMLSR) operation (e.g., can be configured such that a single-radio is used to listen to two or more links simultaneously).

As shown, the SOC 200 can include processor(s) 202 which can execute program instructions for the STA 106, and display circuitry 204 which can perform graphics processing and provide display signals to the display 260. The SOC 200 can also include motion sensing circuitry 270 which can detect motion of the STA 106, for example using a gyroscope, accelerometer, and/or any of various other motion sensing components. The processor(s) 202 can also be coupled to memory management unit (MMU) 240, which can be configured to receive addresses from the processor(s) 202 and translate those addresses to locations in memory (e.g., memory 206, read only memory (ROM) 250, flash memory 210). The MMU 240 can be configured to perform memory protection and page table translation or set up. In some instances, the MMU 240 can be included as a portion of the processor(s) 202.

As shown, the SOC 200 can be coupled to various other circuits of the STA 106. For example, the STA 106 can include various types of memory (e.g., including NAND flash 210), a connector interface 220 (e.g., for coupling to a computer system, dock, charging station, etc.), the display 260, and wireless communication circuitry 230 (e.g., for LTE, LTE-A, 5G NR, 6G, Bluetooth, Wi-Fi, NFC, GPS, UWB, peer-to-peer (P2P), device-to-device (D2D), etc.).

The STA 106 can include at least one antenna, and in some instances multiple antennas 235A and 235B, for performing wireless communication with access points, base stations, wireless stations, and/or other devices. For example, the STA 106 can use antennas 235A and 235B to perform the wireless communication. As noted above, the STA 106 can, in some examples, be configured to communicate wirelessly using a plurality of wireless communication standards or radio access technologies (RATs).

The wireless communication circuitry 230 can include a Wi-Fi modem 232, a cellular modem 234, and a Bluetooth modem 236. Note that one or more of the Wi-Fi modem 232, the cellular modem 234, and/or the Bluetooth modem 236 can be configured for MLO, e.g., as described above. The Wi-Fi modem 232 is for enabling the STA 106 to perform Wi-Fi or other WLAN communications, e.g., on an 802.11 network. The Bluetooth modem 236 is for enabling the STA 106 to perform Bluetooth communications. The cellular modem 234 can be a cellular modem capable of performing cellular communication according to one or more cellular communication technologies, e.g., in accordance with one or more 3GPP specifications.

As described herein, STA 106 can include hardware and software components for implementing aspects of this disclosure. For example, one or more components of the wireless communication circuitry 230 (e.g., Wi-Fi modem 232, cellular modem 234, BT modem 236) of the STA 106 can be configured to implement part or all of the methods for generating and transmitting, and/or receiving and decoding, extended long-range packets described herein, e.g., by a processor executing program instructions stored on a memory medium (e.g., a non-transitory computer-readable memory medium), a processor configured as an FPGA (Field Programmable Gate Array), and/or using dedicated hardware components, which can include an ASIC (Application Specific Integrated Circuit).

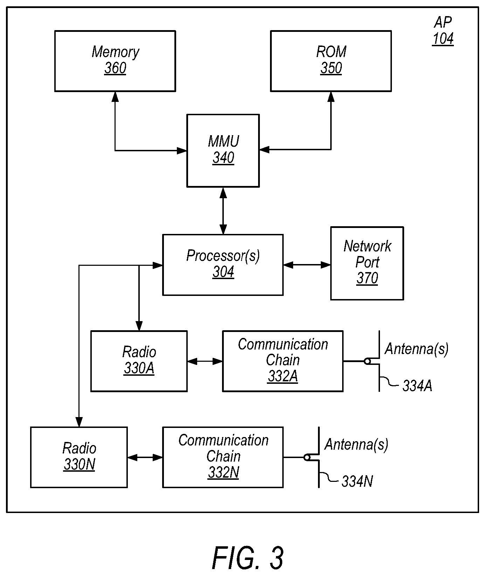

Figure 3 - Block Diagram of an Access Point

Figure 3 illustrates an example block diagram of an access point (AP) 104. In some instances (e.g., in an 802.11 communication context), the AP 104 can also be referred to as a station (STA), and possibly more particularly as an AP STA. It is noted that the AP of Figure 3 is merely one example of a possible access point. As shown, AP 104 can include processor(s) 304, which can execute program instructions for the AP 104. The processor(s) 304 can also be coupled to memory management unit (MMU) 340, which can be configured to receive addresses from the processor(s) 304 and translate those addresses to locations in memory (e.g., memory 360 and read only memory (ROM) 350) or to other circuits or devices.

In some instances, the AP 104 can be configured as a Multi-Link Device (MLD). In such instances, the AP 104 (e.g., one or more radios of the AP 104) can be configured for concurrent data transmission and reception in multiple channels across a single band and/or multiple frequency bands (e.g., such as a 2.4 GHz band, a 5 GHz band, and/or a 6 GHz band). As such, the AP 104 (e.g., one or more radios of the AP 104) can be configured to perform Multi-Link Operation (MLO). For example, the AP 104 (e.g., one or more radios of the AP 104) can be configured to perform Simultaneous Transmit Receive (STR) operation (e.g., can be configured for simultaneous uplink and downlink traffic on a pair of links) and/or Enhanced Multi-Link Single-Radio (EMLSR) operation (e.g., can be configured such that a single-radio is used to listen to two or more links simultaneously).

The AP 104 can include at least one network port 370. The network port 370 can be configured to couple to a network and provide multiple devices, such as STA devices 106, with access to the network, for example as described herein above in Figure 1.

The network port 370 (or an additional network port) can also or alternatively be configured to couple to a cellular network, e.g., a core network of a cellular service provider (e.g., a carrier and/or cellular carrier). The core network can provide mobility related services and/or other services to a plurality of devices, such as STA devices 106. In some cases, the network port 370 can couple to a telephone network via the core network, and/or the core network can provide a telephone network (e.g., among other STA devices serviced by the cellular service provider).

The AP 104 can include one or more radios 330A-330N, each of which can be coupled to a respective communication chain and at least one antenna 334, and possibly multiple antennas. The antenna(s) 334 can be configured to operate as a wireless transceiver and can be further configured to communicate with STA devices 106 via radios 330A-330N. Note that one or more of the radios 330A-330N can be configured for MLO, e.g., as described above. The antenna(s) 334A-N communicate with their respective radios 330A-N via communication chains 332A-N. Communication chains 332 can be receive chains, transmit chains, or both. The radios 330A-N can be configured to communicate in accordance with various wireless communication standards, including, but not limited to, LTE, LTE-A, 5G NR, 6G, UWB, Wi-Fi, BT, etc. The AP 104 can be configured to operate on multiple wireless links using the one or more radios 330A-N, wherein each radio is used to operate on a respective wireless link.

The AP 104 can be configured to communicate wirelessly using multiple wireless communication standards. In some instances, the AP 104 can include multiple radios, which can enable the network entity to communicate according to multiple wireless communication technologies. For example, as one possibility, the AP 104 can include a 4G or 5G radio for performing communication according to a 3GPP wireless communication technology as well as a Wi-Fi radio for performing communication according to Wi-Fi. In such a case, the AP 104 can be capable of operating as both a cellular base station and a Wi-Fi access point. As another possibility, the AP 104 can include a multi-mode radio, which is capable of performing communications according to any of multiple wireless communication technologies (e.g., 5G NR and Wi-Fi, 5G NR and LTE, etc.). As still another possibility, the AP 104 can be configured to act exclusively as a Wi-Fi access point, e.g., without cellular communication capability.

As described further herein, the AP 104 can include hardware and software components for implementing or supporting implementation of features described herein, such as generating and transmitting, and/or receiving and decoding, extended long-range packets, among various other possible features. The processor 304 of the AP 104 can be configured to implement, or support implementation of, part or all of the methods described herein, e.g., by executing program instructions stored on a memory medium (e.g., a non-transitory computer-readable memory medium) to operate multiple wireless links using multiple respective radios. Alternatively, the processor 304 can be configured as a programmable hardware element, such as an FPGA (Field Programmable Gate Array) or ASIC (Application Specific Integrated Circuit), or a combination thereof. Alternatively (or in addition) the processor 304 of the AP 104, in conjunction with one or more of the other components 330, 332, 334, 340, 350, 360, 370 can be configured to implement, or support implementation of, part or all of the features described herein.

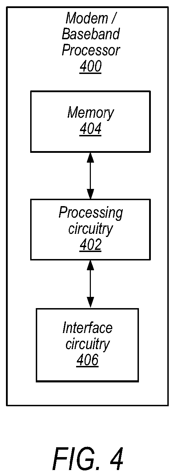

Figure 4 - Block Diagram of a Modem or Baseband Processor

Figure 4 illustrates an example block diagram of a modem 400, which can also be referred to as baseband processor 400. The modem 400 can provide signal processing functionality for one or more wireless communication technologies, such as Wi-Fi, Bluetooth, and/or a cellular (e.g., 3GPP) communication technology. Thus, as one possibility, modem 400 can represent a Wi-Fi modem; for example, the modem 400 illustrated in Figure 4 can represent one possible example of Wi-Fi modem 232 illustrated in Figure 2. As another possibility, modem 400 can represent a cellular modem or cellular baseband processor; for example, the modem 400 illustrated in Figure 4 can represent one possible example of cellular modem 234 illustrated in Figure 2. As a still further possibility, modem 400 can represent a Bluetooth modem; for example, the modem 400 illustrated in Figure 4 can represent one possible example of Wi-Fi modem 236 illustrated in Figure 2. In some instances, the modem 400 could implement functionality for supporting communication according to multiple wireless communication technologies. At least in some instances, the modem 400 can run a real-time operating system, e.g., for facilitating performance of timing-dependent wireless communication functionality.

In some instances, the modem 400 can be configured for concurrent data transmission and reception in multiple channels across a single band and/or multiple frequency bands (e.g., such as a 2.4 GHz band, a 5 GHz band, and/or a 6 GHz band). As such, the modem 400 can be configured to perform Multi-Link Operation (MLO). For example, the modem 400 can be configured to perform Simultaneous Transmit Receive (STR) operation (e.g., can be configured for simultaneous uplink and downlink traffic on a pair of links) and/or Enhanced Multi-Link Single-Radio (EMLSR) operation (e.g., can be configured such that a single-radio is used to listen to two or more links simultaneously).

The modem 400 can include processing circuitry 402, which could include one or more processor cores, ASICs, programmable hardware elements, digital signal processors, and/or other processing elements. The processing circuitry can be capable of preparing baseband signals for up-conversion and transmission by radio circuitry of a wireless device, and/or for processing baseband signals received and down-converted by radio circuitry of a wireless device. Such processing could include signal modulation, encoding, decoding, etc., among various possible functions. The processing circuitry can also or alternatively be capable of performing functionality for one or more baseband and/or other layers/sublayers of a protocol stack for the wireless communication technology (or technologies) implemented by the modem 400, such as physical layer (PHY) functionality, media access control (MAC) functionality, logical link control (LLC) functionality, radio resource control (RRC) functionality, radio link control (RLC) functionality, etc. In some instances, the modem 400 can itself include at least some radio circuitry (e.g., for performing the conversion of input baseband signals to radio frequency signals and/or of input radio frequency signals to baseband signals). Alternatively, or in addition, some or all such functions can be performed by separate radio/transceiver components of the wireless device.

The modem 400 can also include memory 404, which can include a non-transitory computer-readable memory medium. The memory 404 can include program instructions for performing signal processing and/or any of various possible general processing functions. The processing circuitry 402 can be capable of executing the program instructions stored in the memory 404. The memory 404 can also store data generated and/or used during processing performed by the processing circuitry 402.

As shown, the modem 400 can further include interface circuitry, e.g., for communicating with other components of a wireless device (such as STA 106 or AP 104 illustrated in Figures 1-3), such as an application processor, radio / transceiver circuitry, and/or any of various other components. Such interfaces can be implemented in any of various ways; for example, as one possibility, the modem 400 can have a direct interface with transceiver circuitry of a wireless device, and can have an additional indirect interface with an application processor and/or other components of the wireless device by way of a system bus. Other configurations are also possible.

In at least some instances, the hardware and software components of the modem 400 can be configured to implement or support implementation of features described herein, such as generating, transmitting, receiving, and/or decoding extended long-range packets, among various other possible features. For example, the processing circuitry 402 of the modem 400 can be configured to implement, or support implementation of, part or all of the methods described herein, e.g., by executing program instructions stored on memory (e.g., non-transitory computer-readable memory medium) 404 and/or using dedicated hardware components.

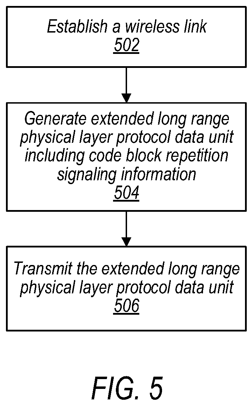

Figure 5 - Extended Long Range Packet Use Flowchart

Figure 5 is a flowchart diagram illustrating a method for supporting extended long range packet use in a WLAN, according to some embodiments. In various embodiments, some of the elements of the methods shown can be performed concurrently, in a different order than shown, can be substituted for by one or more other method elements, or can be omitted. Additional method elements can also be performed as desired.

Aspects of the method of Figure 5 can be implemented by a wireless device, such as the AP 104 or STA 106 illustrated in and described with respect to Figures 1-4, or more generally in conjunction with any of the computer circuitry, systems, devices, elements, or components shown in the Figures, among others, as desired. For example, a processor (such as baseband processor 400 illustrated in and described with respect to Figure 4) and/or other hardware of such a device can be configured to cause the device to perform any combination of the illustrated method elements and/or other method elements.

Note that while at least some elements of the method of Figure 5 are described in a manner relating to the use of communication techniques and/or features associated with IEEE 802.11 specification documents, such description is not intended to be limiting to the disclosure, and aspects of the method of Figure 5 can be used in any suitable wireless communication system, as desired. As shown, the method can operate as follows.

At least two wireless devices may establish a wireless association (502). The wireless association may be established using Wi-Fi, wireless communication techniques that are based at least in part on Wi-Fi, and/or any of various other wireless communication technologies, according to various embodiments. For example, an access point (AP) wireless device may provide beacon transmissions including information for associating with the AP wireless device, and one or more other wireless devices (e.g., non-AP wireless devices) may request to associate with the AP wireless device using the information provided in the beacon transmissions, as one possibility. Variations and/or other techniques for establishing an association are also possible.

The AP wireless device may provide wireless local area network functionality to associated wireless devices, at least according to some embodiments. As part of the wireless local area network functionality, it may be possible for wireless devices to contend for medium access and perform wireless transmissions on one or more wireless communication channels (each of which could possibly include multiple sub-channels) according to general provisions of the wireless communication technology in use by the wireless local area network (e.g., Wi-Fi, as one possibility) and/or network specific parameters configured by the AP wireless device.

A wireless device may perform a data transmission to another wireless device with which it has formed an association. According to various embodiments, the data transmission can be initiated by the wireless device by contending for medium access (e.g., to avoid collisions and potential interference), or by receiving a transmit opportunity grant from another wireless device (e.g., the device with which it has formed an association) that has already contended for and obtained medium access, among other possibilities. Once medium access is obtained, the wireless device can transmit a physical layer (PHY) protocol data unit (PPDU) (which may also be referred to as a data frame) to the destination wireless device. The data frame can include physical layer signaling (e.g., including a preamble for frame detection, timing and frequency synchronization, channel estimation, etc., and header information indicating packet configuration, format, data rates, channel occupation time, and/or other control information) and data (which may in turn include one or more higher layer packets, such as media access control (MAC) protocol data units (MPDUs).

In some instances, the data transmission may include an extended long range (ELR) data transmission, for example to improve data rates and/or reliability, e.g., in case of poor channel conditions (which could be caused at least in part by the wireless devices attempting to communicate at a relatively large distance) and/or based on any of various other possible considerations. In such a scenario, the wireless device can generate an ELR PPDU (504), which can include use of code block repetition (e.g., one or more repetitions of the forward error correction code bits) as well as code block repetition information (e.g., which could be implicitly carried in MCS signaling information) to assist the receiver to decode the data included in the ELR PPDU.

Handling the code block repetition for the ELR PPDU generation can be performed in any of a variety of ways. One aspect can include whether and how to apply pre-forward error correction (FEC) padding to the data bits of the ELR PPDU. For example, it can be possible to skip high efficiency / extremely high throughput (HE/EHT) pre-FEC padding (while possibly padding the least number of bits to ensure that an integer number of byte (or multi-byte) units are processed by the FEC operation), or to perform HE/EHT pre-FEC padding before the code block repetition, and/or to perform HE/EHT pre-FEC padding after the code block repetition, among various possibilities.

If no HE/EHT pre-FEC padding process is used, the wireless device can pad the least number of bits to satisfy that the number of FEC output bits before code block repetition is a multiple of octet units for the ELR PPDU, in some embodiments. This can be based at least in part on the number of data bits and the number of code block repetitions, at least in some embodiments. In some instances, enough pre-FEC padding bits can also be added such that the total number of bits output by the FEC can be signaled accurately (e.g., as an integer number) in a selected unit size (e.g., 1 byte units, 2 byte units, 4 byte units, etc.). In some embodiments, the number of FEC code bits can be indicated in such units of one or more bytes to reduce the signaling load needed to indicate this information. The unit size for reporting the number of FEC code bits can potentially depend on the data rate (e.g., and corresponding modulation and coding scheme (MCS)). For example, for a higher data rate, it could be possible that a larger unit size (e.g., 4 bytes, as one possibility) is used than for a lower data rate (e.g., 2 bytes, as one possibility). Other options are also possible. After FEC and code block repetition have been performed, post-FEC padding can also be added to the ELR PPDU, for example to fill any remainder of the last OFDM symbol that will be used to carry the ELR PPDU after all forward error correction code bits are accounted for.

In a scenario with no HE/EHT pre-FEC padding process, it can be possible that the signaling information in the ELR preamble indicates the number of FEC code bits in multiples of byte units before code block repetition for the ELR PPDU. The MCS signaling information in ELR preamble can also indicate the number of code block repetitions used. Such information can be configured for a receiver to be able to use to determine the number of orthogonal frequency division multiplexing (OFDM) symbols for data field processing, and the number of coded bits for log likelihood ratio (LLR) combining.

If HE/EHT pre-FEC padding process is used before code block repetition, the wireless device can determine an initial number of OFDM symbols for the ELR PPDU, and an initial pre-FEC padding factor for inserting pre-FEC padding before the code block repetition, e.g., to align the end of the FEC output code bits before the code block repetition with the last OFDM symbol segment boundary. The initial number of OFDM symbols can be determined as a number of symbols that is sufficient to carry the data bits given the MCS. The pre-FEC padding factor can then be determined based on how much excess/remainder there is in the initial number of OFDM symbols, e.g., to fill any such excess/remainder. Once FEC processing and code block repetitions are performed, the final number of OFDM symbols can be determined based at least in part on the resulting number of code bits. Additional post-FEC padding can then be added to the ELR PPDU, for example to fill any remainder of the last OFDM symbol that will be used to carry the ELR PPDU. Note that the approach of adding pre-FEC padding before code block repetition can be useful both for generating PPDUs with code block repetition and for generating PPDUs without code block repetition, and thus could potentially have a lower overall implementation complexity, at least in some embodiments, but may also have the potential to result in a longer packet length (e.g., one or more additional OFDM symbols may be needed) than an approach without pre-FEC padding or in which pre-FEC padding is determined after code block repetition.

In a scenario with pre-FEC padding inserted before code block repetition, it can be possible that the code block repetition signaling information indicates the (final) number of OFDM symbols for the ELR PPDU and the pre-FEC padding factor. The MCS signaling information in the ELR preamble can also indicate the number of code block repetitions used. Such information can be configured for a receiver to be able to use to determine the number of coded bits for log likelihood ratio (LLR) combining.

If HE/EHT pre-FEC padding process is used after code block repetition, the wireless device can determine an initial number of OFDM symbols for the ELR PPDU, and an initial pre-FEC padding factor for inserting pre-FEC padding after the code block repetition, e.g., to align the end of the FEC output code bits after the code block repetition with the last OFDM symbol segment boundary. The initial number of OFDM symbols can be determined as a number of symbols that is sufficient to carry the coded bits, after FEC and code block repetition, given the MCS. The pre-FEC padding factor can then be determined based on how much excess/remainder there is in the initial number of OFDM symbols, e.g., to fill any such excess/remainder. Depending on the coding method (e.g., if low density parity code (LDPC) is used and a LDPC extra symbol segment is used), the initial number of OFDM symbols and initial pre-FEC padding factor can be modified to determine the final number of OFDM symbols and final pre-FEC padding factor, e.g., based on the additional symbol segment. Otherwise (e.g., if binary convolutional code (BCC) is used or LDPC without a LDPC extra symbol segment), it can be possible that the initial number of OFDM symbols and initial pre-FEC padding factor are also the final number of OFDM symbols and the final pre-FEC padding factor. Additional post-FEC padding can also be added to the ELR PPDU, for example to fill any remainder of the last OFDM symbol that will be used to carry the ELR PPDU after the FEC and code block repetitions. Note that the approach of calculating the amount of pre-FEC padding to use based on code block repetition application can potentially result in a shorter packet length than an approach in which pre-FEC padding is determined before code block repetition, and thus can possibly have a higher spectrum efficiency than such an approach, but may also carry a higher implementation complexity cost in some embodiments, e.g., as it may require more overall calculations to be performed by the transmitter and receiver, at least in some embodiments.

In a scenario with pre-FEC padding inserted after code block repetition, the final number of OFDM symbols for the ELR PPDU and the final pre-FEC padding factor can be signaled in the ELR preamble. The MCS signaling information can indicate the number of code block repetitions used. Such information can be configured for a receiver to be able to use to determine the number of coded bits for log likelihood ratio (LLR) combining.

In some embodiments, the ELR PPDU can include an early packet classification field (which can also be referred to as a "MARK-SEQ" field), which can be used by a receiver to perform at least some aspects of packet classification based on the packet headers. In some embodiments, the early packet classification field can include one or more sequences configured to indicate basic service set (BSS) color information. The sequences could be selected to have low cross correlation and/or low peak to average power ratio when modulated in the early packet classification symbol(s). As one example, the early packet classification field could include two symbols, of which each could carry a sequence selected from multiple possible sequences, such that the BSS color value (or a portion thereof) can be indicated using the selected combination of sequences. This information can thus be configured for use by a receiver to determine whether a PPDU is for a BSS with which it is associated, and possibly to terminate packet reception early if not.

Note that signaling information for data demodulation can be carried in any of multiple possible locations within the ELR PPDU. In some embodiments, this information can be carried in an ELR-SIG field. As one possibility, this field can be located in PPDU headers before an ultra high reliability short training field (UHR-STF). In this case, a similar tone plan as 802.11 HE-SIG-A format can be used for the ELR-SIG field, or the same tone plan as for the ELR data portion of the frame, among various possibilities. As another possibility, this field can be located in PPDU headers after an ultra high reliability long training field (UHR-LTF) of the ELR PPDU. In this case, the same tone plan as for the ELR data portion of the PPDU can be used, with the lowest coding rate, as one possibility. Other options are also possible.

The wireless device can transmit the ELR PPDU (506) in a wireless manner. The intended recipient wireless device can receive the ELR PPDU in a wireless manner and decode the ELR PPDU using the code block repetition signaling information. This can include determining the number of code block repetitions, identifying which portion(s) of the transmission are FEC coded bits, pre-FEC padding, and post-FEC padding to be able to extract and perform LLR combining on the FEC coded bits, and to perform FEC decoding after the LLR combining.

In some embodiments, the recipient wireless device can also use the information (e.g., sequence(s)) in the early packet classification field to identify that the ELR PPDU is for a BSS with which the recipient wireless device is associated, and to correspondingly continue with packet reception and decoding, and eventually to determine that it is the (or a) intended recipient for the ELR PPDU. In contrast, it can be the case that other wireless devices (e.g., associated with other BSSs) can begin receiving the ELR PPDU, but determine based at least in part on the information in the early packet classification field that the ELR PPDU is for a BSS with which the recipient wireless device is not associated, and to correspondingly stop packet reception and decoding, at least according to some embodiments. In some embodiments, when a wireless device (e.g. non-AP STA) wants to communicate with another wireless device (e.g. AP STA), with which the non-AP STA is not associated, using the ELR PPDU, the non-AP STA may be able to use the early packet classification field to identify the BSS of the AP. In this case, both wireless devices can use the same identifier in the early packet classification to communicate each other.

Thus, according to the method of Figure 5, it can be possible to generate, transmit, receive, and decode an extended long range packet for long range communication in a wireless local area network setting, at least according to some embodiments.

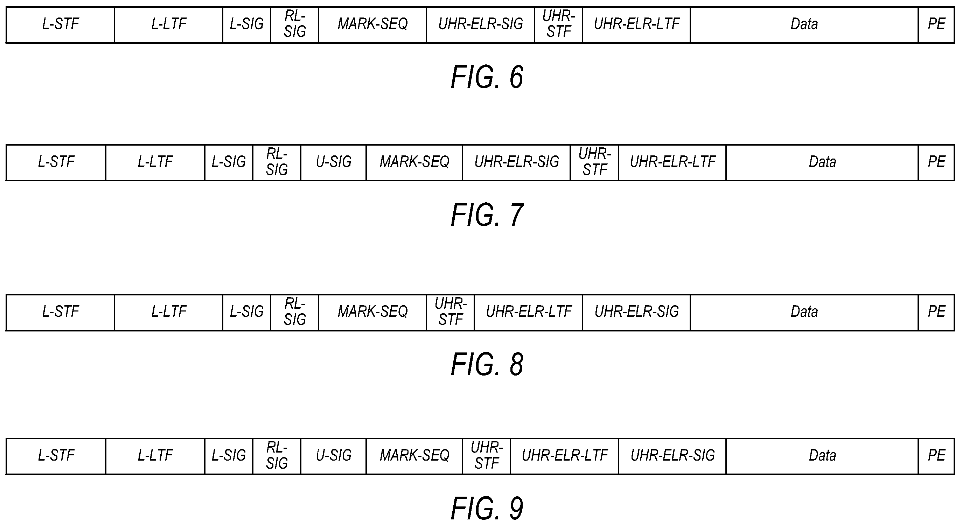

Figures 6-17 and Additional Information

Figures 6-17 illustrate further aspects that might be used in conjunction with the method of Figure 5 if desired. It should be noted, however, that the exemplary details illustrated in and described with respect to Figures 6-17 are not intended to be limiting to the disclosure as a whole: numerous variations and alternatives to the details provided herein below are possible and should be considered within the scope of the disclosure.

For a variety of reasons, it can be typical that a non-AP STA's transmit power is about 10 dB lower than that of an AP STA in an IEEE 802.11 based wireless communication system. For example, this can be due to regulation (e.g., different transmit power restrictions for AP STAs and non-AP STAs), implementation differences (e.g., an AP STA's power amplifier (PA) can be better than a non-AP STA's PA, such that lower transmit power is needed for the same transmit error vector magnitude (EVM)), and/or different numbers of antennas (e.g., an AP STA could have 4 antennas while a non-AP STA could have 2 antennas), among various other possibilities. This can result in about a 6 dB link budget difference between downlink and uplink (e.g., 10 dB transmit power difference can be closed by 6 dB link budget improvement + 3 dB from antenna and 1 dB from more diversity gain from more antennas), in some instances. Providing uplink link budget improvements could accordingly be beneficial (e.g., to potentially provide more than 1.5 Mbps data rate in 5/6 GHz bands), particularly for supporting extended long range communication between an AP STA and a non-AP STA, at least in some embodiments.

In the 2.4 GHz range, it can be possible to use IEEE 802.11/802.11b, as Rx sensitivity for 802.11/11b 1Mbps rate can be about 4-5 dB better than that of 802.11g, at least in some instances. Additionally, an orthogonal frequency division multiplexing (OFDM) system can have better throughput than a direct sequence spread spectrum (DSSS), at least in some instances. For example, it may be possible to achieve more than 1.5 Mbps with 6 dB link budget improvement.

According to the techniques described herein, it can be possible to use an OFDM based physical layer protocol data unit (PPDU) design for 2.4 GHz with about 1 Mbps data rate. It can be the case that beacon frames are not sent using this PPDU format (no BSS range extension). A single such PPDU format (or possibly at least the same packet detection) can be designed for both downlink and uplink in 2.4 GHz (e.g., with same BSS range as 802.11/11b), potentially with minimum data rate of about 1 Mbps, and for uplink (e.g., only) in 5 GHz and 6 GHz, potentially with minimum data rate of about 1.5 Mbps.

Figures 6-9 illustrate possible format elements for a potential ultra high reliability (UHR) extended long range (ELR) PPDU design, according to some embodiments. As shown, the design may include L-STF, L-LTF, L-SIG, RL-SIG, MARK-SEQ, UHR-STF, UHR-ELR-LTF, UHR-ELR-SIG, Data, and packet extension (PE) fields. In some instances (e.g., as in Figures 7 and 9), a U-SIG field can also be included. The L-STF and L-LTF can be boosted by 3-6 dB similar to HE ER SU PPDU.

The MARK-SEQ field (e.g., after RL-SIG in Fig 6 and 8 or after U-SIG in Fig 7 and 9) can include one or two (or another number) symbols that can be used for early packet classification, in some embodiments. Each symbol can carry one of a selected number (e.g., 4, 8, or any other number) of sequences. The sequence used can be determined by BSS color so that it can be used for early termination. For example, in a scenario with a 2 symbol field, the first symbol could be determined based on the first three most significant bits (MSBs) of BSS color and the second symbol could be determined based on the remaining three bits of BSS color, as one possibility. With 8/4/2 sequences, it can be possible for the receiver to differentiate 64/16/4 possible combinations. Thus, which sequence(s) to use can be derived by (part of) BSS color. Other designs are also possible.

For the symbol construction, in some instances, the pilots can be as defined in 802.11a/g, i.e., such that $p_n P_k$, $p_{n+k}$ [1 1 1 -1] in [-21, -7, 7, 21] where n is the n-th symbol and k is the number of symbols before MARK-SEQ field after L-LTF. Sequence selection for the 1st and 2nd symbol can be:
M(k1,: ) and M(k2,: ),
where:

k1 = bi2de(BSS_COLORb(1:3)),
k2 = bi2de(BSS_COLORb(4:6)), and
BSS_COLORb=de2bi(BSS_COLOR).

In this example sequence selection technique, bi2de is binary to decimal function and de2bi is decimal to binary function. In this case, the length of sequence is 48. The selected sequences can be placed in 802.11a/g data tone locations, e.g., [-26, -25, ..., -1, 1, ..., 25, 26], except pilot locations.

Alternative symbol construction mechanisms are also possible. In one such example, the pilots can also be as defined in 802.11a/g, i.e., such that $p_a P_k$, $p_{n+k}$ [1 1 1 -1] in [-21, -7, 7, 21] where n is the n-th symbol and k is the number of symbols before MARK-SEQ field after L-LTF. Extra tones can be added and those can be the same as defined in 802.11ax/be in L-SIG/RL-SIG, i.e., [-1 -1 -1 1] in [-28, -27, 27, 28], noting that these extra tones can be used as pilots or extra reference signal. Sequence selection for the 1st and 2nd symbol can be:

M(k1,: ) and M(k2,: ),
where:

k1 = bi2de(BSS_COLORb(1:3)),
k2 = bi2de(BSS_COLORb(4:6)), and
BSS_COLORb=de2bi(BSS_COLOR).

In this example sequence selection technique, bi2de is binary to decimal function and de2bi is decimal to binary function. In this case, the length of sequence is 48. The selected sequences can be placed in 802.11a/g data tone locations, e.g., [-26, -25, ..., -1, 1, ..., 25, 26], except pilot locations.

In another such example, the pilots can also be as defined in 802.11a/g, i.e., such that $p_n P_k$, $p_{n+k}$ [1 1 1 -1] in [-21, -7, 7, 21] where n is the n-th symbol and k is the number of symbols before MARK-SEQ field after L-LTF. Sequence selection for the $1^{st}$ and $2^{nd}$ symbol can be:
M(k1,: ) and M(k2,: ),
where:

k1 = bi2de(BSS_COLORb(1:3)),
k2 = bi2de(BSS_COLORb(4:6)), and
BSS_COLORb=de2bi(BSS_COLOR).

In this example sequence selection technique, bi2de is binary to decimal function and de2bi is decimal to binary function. In this case, the length of sequence is 52. The selected sequences can be placed in 802.11ax/be U-SIG tone locations, e.g., [-28, -27, -26, -25, ..., -1, 1, ..., 25, 26, 27, 28], except pilot locations.

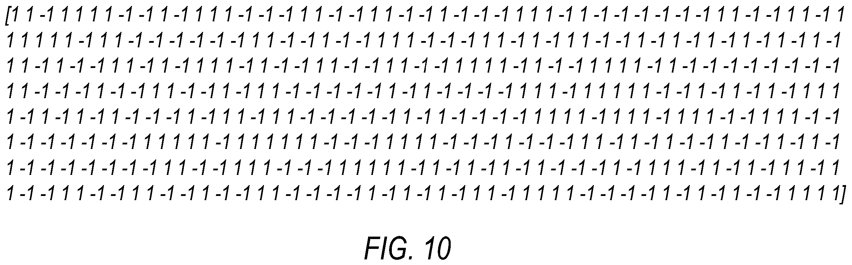

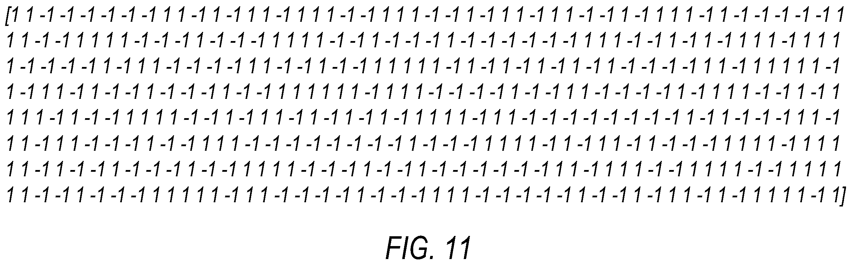

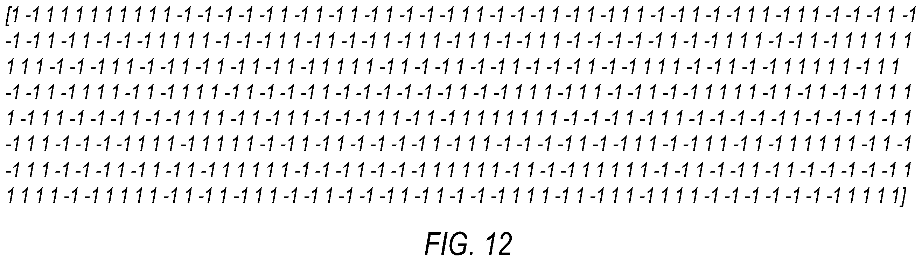

M can be a set of predetermined sequences. A potential desired property of M could include having low cross correlation (e.g., M*M' = length(M)*I, i.e., orthogonal) and having low peak to average power ratio (PAPR) when it is modulated in early packet classification symbols (sequence + pilots (+ extra tones)). In order to differentiate with other PPDU format, entries of M can be ±i. Figure 10 illustrates one example M (e.g., for the first example symbol construction mechanism with PAPR: 3.3761, 3.3785, 3.3996, 3.4734, 3.4980, 3.5061, 3.5128, 3.5148, as one possibility) (M = 1i*). Figure 11 illustrates another example M (e.g., for the second example symbol construction mechanism with PAPR: 3.4176, 3.4592, 3.4890, 3.5018, 3.5279, 3.5297, 3.5323, 3.5368, as one possibility) (M = 1i*). Figure 12 illustrates another example M (e.g., for the third example symbol construction mechanism with PAPR: 3.3221, 3.3225, 3.3287, 3.3585, 3.3649, 3.4141, 3.4160, 3.4245, as one possibility) (M = 1i*).

For the L-SIG, there may be multiple options for the length of the field. As one option, LENGTH%3 = 1 can be used (e.g., HE SU/TB format). As another option, LENGTH%3 = 0 can be used (e.g., EHT+ format). The first option may be good for HE STAs; a problem may already exist for EHT+ packets for such STAs, but boosted L-STF and L-LTF may trigger this more, at least in some instances. The second option may be consistent with other UHR PPDUs; it can be the case that it is possible to provide an indication that it is an ELR packet, and UHR+ STAs can process it correctly, at least in some instances.

As shown, there may be multiple options for the location of the ELR-SIG field. As one possibility (e.g., as shown in Figures 6-7), this field can be included before the UHR(-ELR)-STF. A L-SIG or 802.11 HE-SIG-A tone plan (52/56 tones with 4 $\mu$s OFDM symbol) with a technique such as time domain repetition or code domain repetition can be used in such a scenario, as one possibility. This can provide 3-3.25 bits per symbol: 32 $\mu$s - 60 $\mu$s (8-15 of 4 $\mu$s symbols), in some instances. Or, the same tone plan as the ELR-Data portion, with 52/56 tones in every $4^{th}$ tones, can be used, in some instances.

As another possibility (e.g., as shown in Figures 8-9), this field can be included after the UHR(-ELR)-LTF. The same tone plan as the ELR-Data portion can be used with the lowest coding rate in this scenario, in some instances. This can provide 13/14 bits per symbol: 38.8 $\mu$s - 57.6 $\mu$s (2-4 of, e.g., 14.4 $\mu$s symbols), in some instances.

The contents of the ELR-SIG field can be any of various possible sizes. As one example, the contents of the ELR-SIG can include 23-43 bits. In this example, the contents can include 10/11 bits for Length/$N_{sym}$/$N_{avbits}$/Pre-FEC Padding Factor. In one option, $N_{avbits}$ in B without a factor could result in 11 bits (or smaller number for larger granularity than 1B, e.g., 4B for MCS0, 8B for MCS1, 16B for MCS2 will result in 9 bits, in this example). In another option, $N_{sym}$ before code block (CB) + a factor (which can require more pre-FEC padding (x CB times)) could result in $N_{sym}$ taking 8/9 bits with a factor taking 2 bits, for a total of 10/11 bits. A coding bit could be used to indicate whether low density parity code (LDPC) or binary convolutional code (BCC) is used. 2 bits could be used to indicate MCS. 6 bits could be used to indicate BSS color (though this can be omitted if the MARK-SEQ field is used for BSS color indication, and/or cyclic redundancy check (CRC) code can cover BSS color information. 1 bit can be used as a LDPC extra symbol segment (or LDPC extra symbol can be enforced, in which case such a bit can be omitted). A DL/UL indicator bit can be used, though in some instances it can be possible that this is not included. A STA identifier (STA_ID) of 11 bits (or possibly a smaller number, such as 4 bits) could be included, or may not be included, according to various embodiments. In case of a smaller number, the MSBs or least significant bits (LSBs) of the STA_ID can be used. Alternatively, the AP STA can assign a different number to use for this than the STA_ID. A 4 bit CRC can be used; this can be computed based on [BSS color + ELR-SIG contents before CRC] (e.g., when not sending BSS color in ELR-SIG but indicating it using the modulation of the MARK-SEQ field). A 6 bit tail can also be used, at least in some instances.

Code domain repetition can be used for an ELR packet such as described herein, according to some embodiments. For example, low-rate code can be generated by LDPC/BCC with code domain repetition, to provide SNR boosting in order to support the PPDUs' extended long range.

One design can include repeating code bits after forward error correction (FEC) encoding, and spreading the repetition code bits in the frequency domain. For a HE/EHT PPDU, there can be many post-FEC padding bits in the last OFDM symbol, such that repeating code bits OFDM symbol wise (e.g., as can be possible in 802.11ah, at least in some instances) can degrade the throughput. To improve spectrum efficiency, it can be possible to only repeat the code bits before post-FEC padding. To further improve spectrum efficiency, techniques can be introduced to pad relatively few bits for pre-FEC padding. This can be particularly beneficial when the number of code block repetitions is relatively large.

There can be multiple options for handling pre-FEC and post-FEC padding for a ELR PPDU with code block repetition, according to various embodiments. As one option, the pre-FEC padding process before FEC encoding can be skipped. The number of code bits output from the FEC encoder can be signaled (e.g., in octet units, or any other denomination) to the receiver for data processing. In order to reduce the signaling bits required for a large data packet, the number of code bits output from the FEC encoder could be signaled in multiples of octet units (e.g., units of 2 bytes, 4 bytes, etc.).

As another option, the HE/EHT pre-FEC padding process can be performed after the FEC code bits are repeated, which can potentially reduce the amount of pre-FEC padding used for a ELR PPDU with code block repetition. The number of OFDM symbols and pre-FEC padding factor can be calculated after FEC code bits are repeated. The number of OFDM symbols and pre-FEC padding factor can be signaled to the receiver for data field processing.

A further option can include using the HE/EHT pre-FEC padding process before the FEC code bits are repeated. In this approach, the number of OFDM symbols and pre-FEC padding factor calculated during the pre-FEC padding process can be signaled to the receiver for data field processing. Re-using this existing pre-FEC padding process can be beneficial from an implementation complexity perspective, in some instances, and it may be the case that such an approach can use fewer signaling bits to support receiver processing, although it can also be the case that this approach can have a lower spectrum efficiency than the previously described options, e.g., due to repetition of the pre-FEC padding code bits.

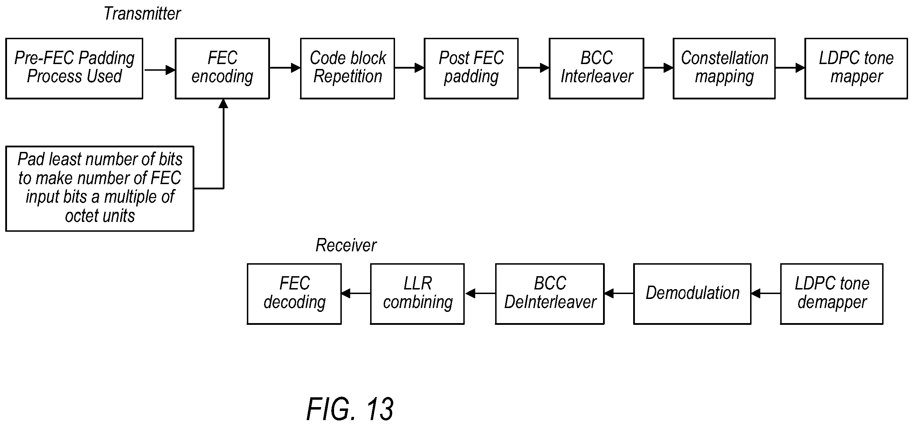

Figure 13 illustrates example aspects of a possible ELR PPDU encoding and decoding process with code block repetition used, according to some embodiments. The illustrated example encoding process can include any of the options previously described herein for handling pre-FEC padding, such as including only padding a minimal number of bits to make the number of FEC input bits a multiple of octet units, performing HE/EHT pre-FEC padding such that the end of FEC output bits after code block repetition is aligned with OFDM symbol segment boundary, or performing HE/EHT pre-FEC padding such that the end of FEC output bits before code block repetition is aligned with OFDM symbol segment boundary.

As shown, once any pre-FEC padding is inserted, FEC encoding, code block repetition, post-FEC padding, BCC interleaving, constellation mapping, and LDPC tone mapping processes may be used. As also shown, the illustrated example decoding process can include LDPC tone demapping, demodulation, BCC deinterleaving, LLR combining, and FEC decoding processes.

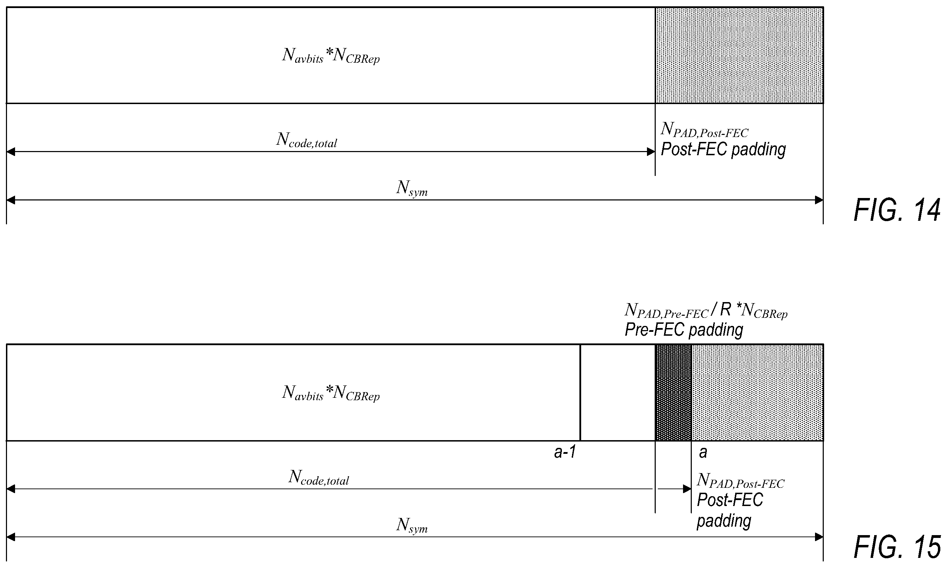

Figure 14 illustrates aspects of an example extended long range packet that could be generated using a process including code block repetition encoding, where HE/EHT pre-forward error correction padding process is not used, according to some embodiments. For this option, to reduce overhead from code block repetition, FEC encoding starts without HE/EHT pre-FEC padding before code block repetition. In order to signal the number of FEC code bits in byte units, or multiples of byte units, it can be the case that a fixed number of pre-FEC padding bits are added before FEC encoding without a full pre-FEC padding process being performed as in HE/EHT PPDU generation.

For LDPC code, the transmitter can calculate the number of code bits $N_{avbits}$ and the number of data bits $N_{pld}$ based on aggregated media access control protocol data unit pre-end-of-frame padding length (APEP_LENGTH) and the FEC code rate R, for example as:

$$N_{avbits} = \frac{8 * APEP\_LENGTH + N_{service}}{R}$$

and

$$N_{pld} = 8 * APEP\_LENGTH + N_{service}$$

if $N_{avbits}$ is signaled in byte units, or

$$N_{avbits} = \left\lceil \frac{APEP\_LENGTH + N_{service}/8}{R*M} \right\rceil * M * 8$$

and

$$N_{pld} = N_{avbits} * R$$

if $N_{avbits}$ is signaled in M byte units.

If the condition in step d) of the LDPC encoding process (e.g., as specified in IEEE 802.11me Draft 5.0, 19.3.11.7.5 LDPC PPDU encoding process) is met, then it may be the case that $N_{avbits}$ shall be increased by the least number of M bytes that covers one OFDM symbol segment code bits $N_{CBPS,short}$,

$$N_{avbits} = N_{avbits} + \left\lceil \frac{N_{CBPS,short}}{8*M} \right\rceil * M * 8$$

, $N_{punc}$ is recomputed, and *LDPC extra symseg* is set to 1; otherwise, *LDPC extra symseg* can be set to 0. It may be the case that *LDPC_extra_symseg* needs to be signaled to the receiver for LDPC decoding in this approach.

For BCC code, the transmitter can calculate the number of code bits $N_{avbits}$ and the number of data bits $N_{pld}$ based on APEP_LENGTH and the FEC code rate R, for example as:

$$N_{avbits} = \frac{8*APEP\_LENGTH + N_{tail} + 2 + N_{service}}{R}$$

and

$$N_{pld} = 8 * APEP\_LENGTH + N_{service} + N_{tail} + 2$$

if $N_{avbits}$ is signaled in byte units, where is $N_{tail}$ 6, and 2 bits are pre-FEC padding bits, or

$$N_{avbits} = \left\lceil \frac{APEP\_LENGTH + (N_{service} + N_{tail} + 2)/8}{R*M} \right\rceil * M * 8$$

and

$$N_{pld} = N_{avbits} * R$$

if $N_{avbits}$ is signaled in M byte units. The fixed number of pre-FEC padding bits can be $N_{pld}$ - (8 * $APEP_{LENGTH}$ + $N_{service}$ + $N_{tail}$).

For both LDPC and BCC codes, the final number of coded bits after code block repetition may be $N_{code,total}$ = $N_{avbits}$ * $N_{CBRep}$, where $N_{CBRep}$ is the number of code block repetitions. For BCC codes, code block repetition can be performed before interleaver operation. The transmitter can calculate the final number of OFDM symbols as:

$$N_{sym} = \left\lceil \frac{N_{code,total}}{N_{CBPS}} \right\rceil$$

To determine packet extension (PE) duration, the transmitter can calculate the pre-FEC padding factor *a*:

$$N_{excess} = N_{code,total} \bmod N_{CBPS},$$

and

$$a = \begin{cases} 4, & if \ N_{excess} = 0 \\ \min\left(\left\lceil \frac{N_{excess}}{N_{CBPS,short}} \right\rceil, 4\right) & otherwise \end{cases}$$

Alternatively, the transmitter can skip the PE duration calculation, and append a maximum PE duration after the last OFDM symbol. The transmitter can calculate the number of post-FEC padding bits as:

$$N_{PAD,Post-FEC} = N_{sym} * N_{CBPS} - N_{avbits} * N_{CBRep}$$

The receiver can calculate the number of OFDM symbols $N_{sym}$ for data field processing, and the number of coded bits for log likelihood ratio (LLR) combining $N_{pre-comb,code}$ based on the signaled $N_{avbits}$ value in M bytes units (where M is a positive integer, e.g., M = 1, 2, or 4, as some possibilities), for example as:

$$N_{sym} = \lceil N_{avbits} * N_{CBRep}/N_{CBPS} \rceil,$$

and

$$N_{pre-comb,code} = N_{avbits} * N_{CBRep},$$

where $N_{CBRep}$ is indicated by the ELR PPDU MCS value. The number of code bits in the last symbol can be determined as:

$$N_{CBPS,last} = N_{pre-comb,code} - (N_{sym} - 1) * N_{CBPS}$$

For BCC decoding, LLR of repeated coded bits can be combined after deinterleaving. For LDPC decoding, LLR of repeated code bits can be combined after demodulation. After LLR combining, the FEC decoding process can be similar to that used for HE/EHT PPDU. For LDPC decoding, the number of data bits can be calculated as:

$$N_{pld} = \begin{cases} R * N_{avbits}, & if\ LDPC\_extra\_symseg = 0 \\ R * (N_{avbits} - \lceil \frac{N_{CBPS,short}}{8*M} \rceil * 8 * M), & if\ LDPC\_extra\_symseg = 1 \end{cases}$$

Figure 15 illustrates aspects of an example extended long range packet that could be generated using a process including code block repetition encoding, where a pre-forward error correction padding factor is determined after forward error correction code bits are repeated, according to some embodiments. For this option, to reduce the pre-FEC padding bits, the transmitter can calculate the initial number of OFDM symbols $N_{sym,init}$ and initial pre-FEC padding factor $a_{init}$ after FEC code bits repetition as:

$$N_{sym,init} = \lceil \frac{8*APEP\_LENGTH+N_{service}+N_{tail}}{R} * N_{CBRep}/N_{CBPS} \rceil,$$

where $N_{tail}$ is 0 for LDPC code, and 6 for BCC code,

$$N_{excess} = (\frac{8*APEP\_LENGTH+N_{service}+N_{tail}}{R} * N_{CBRep})\ mod\ N_{CBPS},$$

and

$$a = \begin{cases} 4, & if\ N_{excess} = 0 \\ min\left(\lceil \frac{N_{excess}}{N_{CBPS,short}} \rceil, 4\right) otherwise \end{cases}$$

For LDPC code, the transmitter can next calculate $N_{avbits}$ and $N_{pld}$ for the LDPC encoding process before code block repetition based on $N_{sym,init}$, $a_{init}$, $N_{CBRep}$, and code rate $R$, for example as:

$$N_{avbits} = \begin{cases} \lfloor ((N_{sym,init} - 1) * N_{CBPS} + a_{init} * N_{CBPS,short})/N_{CBRep} \rfloor, & if\ a_{init} < 4 \\ \lfloor N_{sym,init} * N_{CBPS}/N_{CBRep} \rfloor, & if\ a_{init} = 4 \end{cases},$$

and

$$N_{pld} = \lfloor N_{avbits} * R \rfloor$$

If the condition in step d) of the LDPC encoding process (e.g., as specified in IEEE 802.11me Draft 5.0, 19.3.11.7.5 LDPC PPDU encoding process) is met, then it may be the case that $N_{avbits}$ shall be increased by around one OFDM symbol segment code bit so that the total number of code bits after code block repetition is the largest of multiples of within the pre-FEC padding symbol segment boundary, for example as:

$$N_{avbits} =$$
$$\begin{cases} \left\lfloor ((N_{sym,init} - 1) * N_{CBPS} + (a_{init} + 1) * N_{CBPS,short})/N_{CBRep} \right\rfloor, & if \ a_{init} < 3 \\ \left\lfloor N_{sym,init} * \frac{N_{CBPS}}{N_{CBRep}} \right\rfloor, & if \ a_{init} = 3, \\ \left\lfloor (N_{sym,init} * N_{CBPS} + N_{CBPS,short})/N_{CBRep} \right\rfloor, & if \ a_{init} = 4 \end{cases}$$

Additionally, it can be the case that $N_{punc}$ is recomputed, and *LDPC_extra_symseg* is set to 1; otherwise, *LDPC extra symseg* can be set to 0. It may be the case that *LDPC_extra_symseg* needs to be signaled to the receiver for LDPC decoding in this approach.

For BCC code, the transmitter can next calculate $N_{avbits}$ and $N_{pld}$ for the BCC encoding process before code block repetition based on $N_{sym,init}$, $a_{init}$, $N_{CBRep}$, and code rate $R$, for example as:

$$N_{avbits} = \begin{cases} \left\lfloor ((N_{sym,init} - 1) * N_{CBPS} + a_{init} * N_{CBPS,short})/N_{CBRep} \right\rfloor, & if \ a_{init} < 4 \\ \left\lfloor N_{sym,init} * N_{CBPS}/N_{CBRep} \right\rfloor, & if \ a_{init} = 4 \end{cases},$$

and

$$N_{pld} = \lfloor N_{avbits} * R \rfloor$$

The transmitter can calculate the number of pre-FEC padding bits as:

$$N_{PAD,pre-FEC} = N_{pld} - 8 * APEP_{LENGTH} - N_{service} - N_{tail},$$

$$N_{PAD,pre-FEC,MAC} = 8 * \left\lfloor \frac{N_{PAD,pre-FEC}}{8} \right\rfloor, \text{ and}$$

and

$$N_{PAD,pre-FEC,PHY} = N_{PAD,pre-FEC} \, mod \, 8$$

For both LDPC and BCC codes, the final number of coded bits can be $N_{code,total} = N_{avbits} * N_{CBRep}$ after code block repetition, where $N_{CBRep}$ is the number of code block repetitions. For BCC codes, the code block repetition can be performed before interleaver operation. If using BCC encoding, or using LDPC encoding with *LDPC extra symseg* set to 0, $N_{sym} = N_{sym,init}$, and $a = a_{init}$. If using LDPC encoding, and *LDPC extra symseg* is set to 1, the transmitter can further calculate the number of OFDM symbols $N_{sym}$ and pre-FEC padding factor $a$, for example as:

$$N_{sym} = \left\lceil \frac{N_{code,total}}{N_{CBPS}} \right\rceil,$$

$$N_{excess} = N_{code,total} \, mod \, N_{CBPS},$$

and

$$a = \begin{cases} 4, & if \ N_{excess} = 0 \\ \min\left(\left\lceil \frac{N_{excess}}{N_{CBPS,short}} \right\rceil, 4\right) & otherwise \end{cases}$$

The transmitter can signal $N_{sym}$ and $a$ to the receiver for data field processing. The transmitter can calculate the number of post-FEC padding bits as:

$$N_{PAD,Post-FEC} = N_{sym} * N_{CBPS} - N_{avbits} * N_{CBRep}$$

The receiver can calculate the number of coded bits for LLR combining based on the signaled number of OFDM symbols $N_{sym}$, the pre-FEC padding factor $a$, and $N_{CBRep}$ (e.g., which can be indicated by MCS value), for example as:

$$N_{pre-comb,code} = \left\lfloor \left( (N_{sym} - 1) * N_{CBPS} + N_{CBPS,last} \right)/N_{CBRep} \right\rfloor * N_{CBRep},$$

$$N_{CBPS,last} = \begin{cases} a * N_{CBPS,short}, & if \ a < 4 \\ N_{CBPS}, & if \ a = 4 \end{cases}$$

For BCC decoding, LLR of repeated coded bits can be combined after deinterleaving. For LDPC decoding, LLR of repeated code bits can be combined after demodulation. After LLR combining, the FEC decoding process can be similar to that used for HE/EHT PPDU. For LDPC decoding, the number of data bits can be calculated as:

$$N_{pld} =$$

$$\begin{cases} \left\lfloor R * \left\lfloor ( (N_{sym} - 1) * N_{CBPS} + N_{CBPS,last} )/N_{CBRep} \right\rfloor \right\rfloor, & if \ LDPC\_extra\_symseg = 0 \\ \left\lfloor R * \left\lfloor ( (N_{sym} - 1) * N_{CBPS} + (a - 1) * N_{CBPS,short} )/N_{CBRep} \right\rfloor \right\rfloor, & if \ LDPC\_extra\_symseg = 1 \end{cases}$$

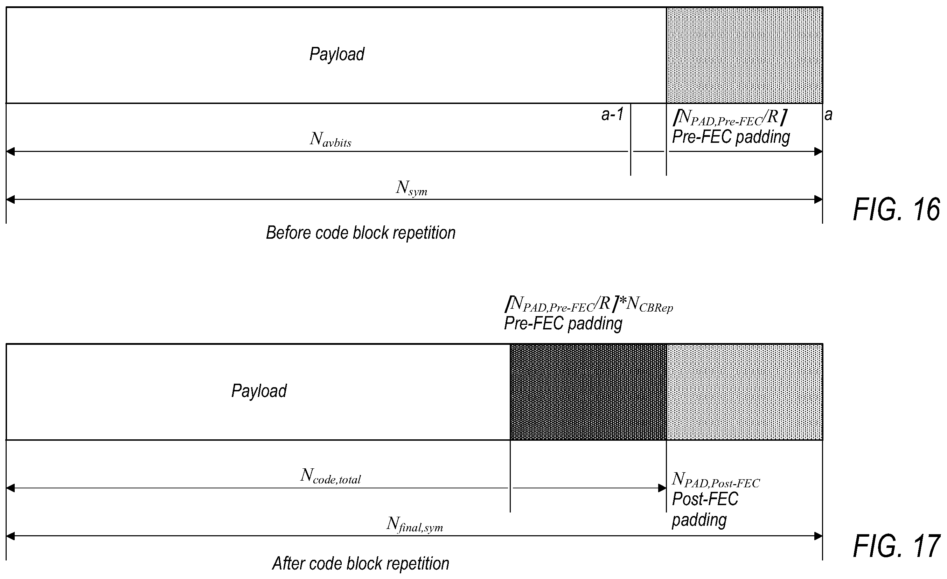

Figures 16-17 illustrate aspects of an example extended long range packet that could be generated using a process including code block repetition encoding, where a pre-forward error correction padding factor is determined before forward error correction code bits are repeated, according to some embodiments. In particular, Figure 16 illustrates aspects of the example packet before code block repetition, while Figure 17 illustrates aspects of the example packet after code block repetition. For this option, the pre-FEC padding process for FEC encoding can be the same as for a HE/EHT PPDU before FEC code bit repetition. The transmitter can compute the initial number of OFDM symbols $N_{sym,init,pre-CBR}$ and intial pre-FEC padding factor $a_{init,pre-CBR}$ before FEC code bits repetition as:

$$N_{sym,init,pre-CBR} = \left\lceil (8 * APEP\_LENGTH + N_{service} + N_{tail})/N_{DBPS,pre-CBR} \right\rceil,$$

$$N_{excess} = (8 * APEP\_LENGTH + N_{service} + N_{tail}) \ mod \ N_{DBPS,pre-CBR},$$

and

$$a_{init} = \begin{cases} 4, & if \ N_{excess} = 0 \\ \min\left(\left\lceil \frac{N_{excess}}{N_{DBPS,short,pre-CBR}} \right\rceil, 4\right) & otherwise \end{cases}$$

The transmitter can also calculate the initial number of data bits and coded bits in the last OFDM symbol as:

$$N_{DBPS,last,init,pre-CBR} =$$

$$\begin{cases} a_{init,pre-CBR} * N_{DBPS,short,pre-CBR}, & if \ a_{init} < 4 \\ N_{DBPS,pre-CBR}, & if \ a_{init} = 4 \end{cases},$$

$$N_{CBPS,last,init} = \begin{cases} a_{init} * N_{CBPS,short}, & if \ a_{init} < 4 \\ N_{CBPS}, & if \ a_{init} = 4 \end{cases}$$

For LDPC encoding, the transmitter can calculate $N_{avbits}$ and $N_{pld}$ as:

$$N_{avbits} = (N_{sym,init} - 1) * N_{CBPS} + N_{CBPS,last,init},$$

and

$$N_{pld} = (N_{sym,init} - 1) * N_{DBPS,pre-CBR} + N_{DBPS,last,init,pre-CBR}$$

If the condition in step d) of the LDPC encoding process (e.g., as specified in IEEE 802.11me Draft 5.0, 19.3.11.7.5 LDPC PPDU encoding process) is met, then it may be the case that $N_{avbits}$ shall be increased by one OFDM symbol segment coded bits, and $N_{punc}$ is recomputed. Further, $N_{sym}$ and $a$ can be updated accordingly.

$$N_{avbits} = \begin{cases} N_{avbits} + N_{CBPS} - 3 * N_{CBPS,short}, & if \ a_{init} = 3 \\ N_{avbits} + N_{CBPS,short}, & otherwise \end{cases}$$

$$N_{sym} = N_{sym,init+1}, if \ a_{init} = 4,$$

$$a = \begin{cases} 1, & if \ a_{init} = 4 \\ a_{init} + 1, & otherwise \end{cases}$$

For BCC encoding, $N_{avbits}$ and $N_{pld}$ can be calculated as:

$$N_{avbits} = \left(N_{sym,init} - 1\right) * N_{CBPS} + N_{CBPS,last,init},$$

and

$$N_{pld} = \left(N_{sym,init} - 1\right) * N_{DBPS,pre-CBR} + N_{DBPS,last,init,pre-CBR},$$

with

$$N_{sym} = N_{sym,init},$$

and $a = a_{init}$ The transmitter can signal the number of OFDM symbols $N_{sym}$ and pre-FEC padding factor $a$ before FEC code block repetition to the receiver for data field processing.

The number of pre-FEC padding bits can be computed as:

$$N_{PAD,pre-FEC} = N_{pld} - 8 * APEP\_LENGTH - N_{service} - N_{tail},$$

$$N_{PAD,pre-FEC,MAC} = 8 * \left\lfloor \frac{N_{PAD,pre-FEC}}{8} \right\rfloor,$$

and

$$N_{PAD,pre-FEC,PHY} = N_{PAD,pre-FEC} \bmod 8$$

The final number of coded bits can be $N_{code,total} = N_{avbits} * N_{CBRep}$. The transmitter can calculate the final number of OFDM symbols $N_{final,sym}$ for data packet transmission as: $N_{final,sym} = \lceil N_{code,total}/N_{CBPS} \rceil$ To determine PE duration, the transmitter can calculate the pre-FEC padding factor $a$:

$$N_{excess} = N_{code,total} \bmod N_{CBPS},$$

and

$$a = \begin{cases} 4, & if \ N_{excess} = 0 \\ \min \left( \left\lceil \frac{N_{excess}}{N_{CBPS,short}} \right\rceil, 4 \right) otherwise \end{cases}$$

Alternatively, the transmitter can skip the PE duration calculation, and append a maximum PE duration after the last OFDM symbol. The transmitter can calculate the number of post-FEC padding bits as:

$$N_{PAD,Post-FEC} = N_{final,sym} * N_{CBPS} - N_{avbits} * N_{CBRep}$$

The receiver can calculate the number of coded bits for LLR combining based on the signaled number of OFDM symbols $N_{sym}$, pre-FEC padding factor $a$, and $N_{CBRep}$ (e.g., which can be indicated by MCS value), for example as:

$$N_{pre-comb,code} = \left( \left( N_{sym} - 1 \right) * N_{CBPS} + N_{CBPS,last} \right) * N_{CBRep},$$

$$N_{CBPS,last} = \begin{cases} a * N_{CBPS,short}, & if \ a < 4 \\ N_{CBPS}, & if \ a = 4 \end{cases}$$

The receiver can also calculate the number of OFDM symbols $N_{final,sym}$ for data field processing as:

$$N_{final,sym} = \lceil N_{pre-comb,code}/N_{CBPS} \rceil$$

For BCC decoding, LLR of repeated coded bits can be combined after deinterleaving. For LDPC decoding, LLR of repeated code bits can be combined after demodulation. After LLR combining, the FEC decoding process can be similar to that used for HE/EHT PPDU.

As can be noted, the different options for handling pre-FEC padding when using code block repetitions can include use of different signaling information to support successful receiver decoding operation. The following description provides several such signaling examples, as well as discussion of some possible benefits and drawbacks of the corresponding approaches, though it should be noted that variations and alternatives to these examples are also possible.

In some embodiments, in an approach in which pre-FEC padding is not used, the number of FEC code bits before code block repetition can be signaled, e.g., in units of byte, or multiples of bytes (such as 2 byte units, 4 byte units, etc.). In some scenarios, 11 bits can be used to signal the $N_{avbits}$ value in byte units for all resource unit (RU) sizes for 1Mbps data rate transmission with max PPDU duration, or 11 bits can be used to signal the $N_{avbits}$ value in 2 bytes units for all RU sizes for 2Mbps data rate transmission with max PPDU duration, or 11 bits can be used to signal the $N_{avbits}$ value in 4 bytes units for all RU sizes for 4Mbps data rate transmission with max PPDU duration.

In this approach, it may be the case that no pre-FEC padding is used, or a fixed number of pre-FEC padding bits can be added just to make the number of FEC code bits are in byte (or multiple byte) units, without going through a full pre-FEC padding process such as can be used in HE/EHT PPDU generation. This approach can potentially use relatively few OFDM symbols to transmit a data packet with code block repetitions, and can potentially require fewer calculations in the PPDU encoding process than the approaches described herein that do include pre-FEC padding. For higher data rate ELR PPDU with signaling unit of 4 bytes, it can be the case that 8 data padding bits are used for LDPC code, which could result in 16 or 32 padding code bits, e.g., depending on the configured code block repetition number. For ELR PPDU with signaling units of 1, 2, or 4 bytes, this approach could require 2 or 10 padding bits for BCC code, which could result in 4, 8, 16, 20, 32, or 40 padding code bits, e.g., depending on the configured code block repetition number.

In some embodiments, in an approach in which the amount of pre-FEC padding is determined after calculating the number of OFDM symbols after FEC code block repetition is used, the number of OFDM symbols $N_{sym}$ and pre-FEC padding factor $a$ after code block repetition can be signaled. In some scenarios, 11 bits can be used for this signaling for any

of 1 Mbps, 2 Mbps, or 4 Mbps data rate transmission with max PPDU duration, where 9 bits are used to signal $N_{sym}$ and 2 bits are used to signal the pre-FEC padding factor $a$ for all RU sizes.

In this approach, the number of OFDM symbols and the pre-FEC padding factor can be calculated after code block repetition, then the pre-FEC padding bits can be calculated after dividing the total coded bits by the code block repetition number. This can potentially use fewer pre-FEC padding bits compared to an approach in which pre-FEC padding is calculated before code block repetition, however, this approach may require more computations to calculate the number of pre-FEC padding bits and post-FEC padding bits than the approaches described herein that do not include pre-FEC padding or in which pre-FEC padding is calculated before code block repetition, at least in some instances.

In some embodiments, in an approach in which the amount of pre-FEC padding is determined before FEC code block repetition is used, the number of OFDM symbols $N_{sym}$ and pre-FEC padding factor $a$ before code block repetition can be signaled. The number of signaling bits can vary depending on data rate and RU selected with this approach. In some scenarios, for 1 Mbps data rate transmission with max PPDU duration, 8 bits can be used for signaling for RU 242, including 6 bits to signal $N_{sym}$ and 2 bits to signal the pre-FEC padding factor, or 9 bits can be used for signaling for RU 106, including 7 bits to signal $N_{sym}$ and 2 bits to signal the pre-FEC padding factor, or 10 bits can be used for signaling for RU 56, including 8 bits to signal $N_{sym}$ and 2 bits to signal the pre-FEC padding factor, or 11 bits can be used for signaling for RU 26, including 9 bits to signal $N_{sym}$ and 2 bits to signal the pre-FEC padding factor. For 2 Mbps data rate transmission with max PPDU duration, 9 bits can be used for signaling for RU 242, including 7 bits to signal $N_{sym}$ and 2 bits to signal the pre-FEC padding factor, or 10 bits can be used for signaling for RU 106, including 8 bits to signal $N_{sym}$ and 2 bits to signal the pre-FEC padding factor, or 11 bits can be used for signaling for RU 56 or RU 26, including 9 bits to signal $N_{sym}$ and 2 bits to signal the pre-FEC padding factor. For 4 Mbps data rate transmission with max PPDU duration, 10 bits can be used for signaling for RU 242, including 8 bits to signal $N_{sym}$ and 2 bits to signal the pre-FEC padding factor, or 11 bits can be used for signaling for RU 106, RU 56, or RU 26, including 9 bits to signal $N_{sym}$ and 2 bits to signal the pre-FEC padding factor.

In this approach, the number of OFDM symbols, the pre-FEC padding factor, and the pre-FEC padding bits can be calculated before code block repetition. It can potentially be possible to reuse the HE/EHT pre-FEC padding process for this part of the PPDU generation. At least in some instances, this approach can also potentially require fewer signaling bits than the approaches described herein that do not include pre-FEC padding or in which pre-FEC padding is calculated after code block repetition. However, it may be possible that adding the pre-FEC padding bits before code block repetition can result in more OFDM symbols being needed (e.g., up to 2 extra OFDM symbols, in some instances), which can reduce spectrum efficiency.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In addition to the above-described exemplary embodiments, further embodiments of the present disclosure can be realized in any of various forms. For example, some embodiments can be realized as a computer-implemented method, a computer-readable memory medium, or a computer system. Other embodiments can be realized using one or more custom-designed hardware devices such as ASICs. Still other embodiments can be realized using one or more programmable hardware elements such as FPGAs.

In some embodiments, a non-transitory computer-readable memory medium can be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., an AP 104 or a STA 106) can be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device can be realized in any of various forms.

Although the embodiments above have been described in considerable detail, numerous variations and modifications will become apparent to those skilled in the art once the above disclosure is fully appreciated. It is intended that the following claims be interpreted to embrace all such variations and modifications.

**Claims**

**1.** A method for operation in wireless communication, comprising:

generating an extended long range, ELR, physical layer protocol data unit, PPDU, comprising performing one or more code block repetitions and generating code block repetition signaling information; and
transmitting the ELR PPDU in a wireless manner.

2. The method of claim 1,
wherein the ELR PPDU comprises an early packet classification field comprising one or more sequences configured to indicate basic service set color information.

3. The method of any of claims 1-2,
wherein the ELR PPDU is generated without performing pre-forward error correction padding before performing the one or more code block repetitions.

4. The method of claim 3,
wherein the code block repetition signaling information indicates a number of forward error correction code bits.

5. The method of claim 4,
wherein the number of forward error correction code bits is indicated in units of one or more bytes.

6. The method of any of claims 1-2, wherein the method further comprises:
performing pre-forward error correction padding for the ELR PPDU after performing the one or more code block repetitions.

7. The method of any of claims 1-2, wherein the method further comprises:
performing pre-forward error correction padding before performing the one or more code block repetitions.

8. The method of any of claims 6-7,
wherein the code block repetition signaling information indicates a number of orthogonal frequency division multiplexing symbols and a pre-forward error correction padding factor.

9. A computer program comprising instructions for performing any of the methods of claims 1-8.

10. A wireless device, comprising:

one or more antennas;
one or more radios operably coupled to the one or more antennas; and
a processor operably coupled to the one or more radios;
wherein the wireless device is configured to:

receive an extended long range, ELR, physical layer protocol data unit, PPDU, comprising code block repetition signaling information; and
decode the ELR PPDU based on the code block repetition signaling information.

11. The wireless device of claim 10,
wherein the ELR PPDU comprises an early packet classification field that comprises one or more sequences configured to indicate basic service set color information.

12. The wireless device of any of claims 10-11,
wherein the code block repetition signaling information indicates a number of forward error correction code bits in units of one or more bytes.

13. The wireless device of any of claims 10-11,
wherein the code block repetition signaling information indicates a number of orthogonal frequency division multiplexing symbols and a pre-forward error correction padding factor associated with pre-forward error correction padding that is performed after forward error correction code block repetition is performed.

14. The wireless device of any of claims 10-11,
wherein the code block repetition signaling information indicates a number of orthogonal frequency division multiplexing symbols and a pre-forward error correction padding factor associated with pre-forward error correction padding that is performed before forward error correction code block repetition is performed.

15. The wireless device of any of claims 10-14,
wherein the code block repetition signaling information is comprised in an ELR-SIG field that is located before an ultra high reliability short training field, UHR-STF, or after an ultra high reliability long training field, UHR-LTF, of the ELR PPDU.

FIG. 1

FIG. 2

FIG. 3

Modem /
Baseband
Processor
400

Memory
404

Processing
circuitry
402

Interface
circuitry
406

FIG. 4

Establish a wireless link
502

Generate extended long range
physical layer protocol data unit
including code block repetition
signaling information
504

Transmit the extended long range
physical layer protocol data unit
506

FIG. 5

| L-STF | L-LTF | L-SIG | RL-SIG | MARK-SEQ | UHR-ELR-SIG | UHR-STF | UHR-ELR-LTF | Data | PE |
|-------|-------|-------|--------|----------|-------------|---------|-------------|------|-----|

**FIG. 6**

| L-STF | L-LTF | L-SIG | RL-SIG | U-SIG | MARK-SEQ | UHR-ELR-SIG | UHR-STF | UHR-ELR-LTF | Data | PE |
|-------|-------|-------|--------|-------|----------|-------------|---------|-------------|------|-----|

**FIG. 7**

| L-STF | L-LTF | L-SIG | RL-SIG | MARK-SEQ | UHR-STF | UHR-ELR-LTF | UHR-ELR-SIG | Data | PE |
|-------|-------|-------|--------|----------|---------|-------------|-------------|------|-----|

**FIG. 8**

| L-STF | L-LTF | L-SIG | RL-SIG | U-SIG | MARK-SEQ | UHR-STF | UHR-ELR-LTF | UHR-ELR-SIG | Data | PE |
|-------|-------|-------|--------|-------|----------|---------|-------------|-------------|------|-----|

**FIG. 9**

FIG. 10

FIG. 11

*FIG. 12*

Transmitter

| Pre-FEC Padding Process Used | → | FEC encoding | → | Code block Repetition | → | Post FEC padding | → | BCC Interleaver | → | Constellation mapping | → | LDPC tone mapper |

Pad least number of bits to make number of FEC input bits a multiple of octet units

Receiver

| FEC decoding | ← | LLR combining | ← | BCC DeInterleaver | ← | Demodulation | ← | LDPC tone demapper |

*FIG. 13*

FIG. 14

FIG. 15

Payload

$[N_{PAD,Pre-FEC}/R]$
Pre-FEC padding

$a-1$ $a$

$N_{avbits}$

$N_{sym}$

Before code block repetition

*FIG. 16*

$[N_{PAD,Pre-FEC}/R]*N_{CBRep}$
Pre-FEC padding

Payload

$N_{code,total}$

$N_{PAD,Post-FEC}$
Post-FEC
padding

$N_{final,sym}$

After code block repetition

*FIG. 17*

## EUROPEAN SEARCH REPORT

**Application Number**

EP 25 17 3532

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NIMA NAMVAR (CHARTER COMMUNICATIONS): "Range Expansion via Repeated Transmission", IEEE DRAFT; 11-24-0067-00-00BN-RANGE-EXPANSION-VIA-REPEATED-TRANSMISSION, IEEE-SA MENTOR, PISCATAWAY, NJ USA , vol. 802.11 UHR; 802.11bn 12 January 2024 (2024-01-12), pages 1-11, XP068275747, Retrieved from the Internet: URL:https://mentor.ieee.org/802.11/dcn/24/11-24-0067-00-00bn-range-expansion-via-repeated-transmission.pptx [retrieved on 2024-01-12] * the whole document * ----- | 1-15 | INV. H04L1/00 H04L1/08 H04L5/00 |
| Y | EP 4 354 998 A1 (HUAWEI TECH CO LTD [CN]) 17 April 2024 (2024-04-17) * abstract * * page 11, paragraph 92 - page 18, paragraph 164 * ----- | 1-15 | |
| A | J.Liu, S.Hu, L.-K.Chiu, S.T-S.Yang, Y-W.Chen, T.Pare, J.Yee: "Enhanced Long Range: Usage Scenarios, Design Target and Feasibility", IEEE 802.11-22/1928r1, Piscataway, NY, USA , 15 November 2022 (2022-11-15), pages 1-13, XP068195350, Retrieved from the Internet: URL:https://mentor.ieee.org/802.11/documents?is_dcn=range [retrieved on 2025-09-15] * the whole document * ----- | 1-15 | **TECHNICAL FIELDS SEARCHED (IPC)** H04L |

The present search report has been drawn up for all claims

| Place of search | Date of completion of the search | Examiner |
|---|---|---|
| Munich | 16 September 2025 | Toumpoulidis, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 3532

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2025

| Patent document cited in search report | | Publication date | Patent family member(s) | | Publication date |
|---|---|---|---|---|---|
| EP 4354998 | A1 | 17-04-2024 | CN | 115604849 A | 13-01-2023 |
| | | | EP | 4354998 A1 | 17-04-2024 |
| | | | US | 2024163042 A1 | 16-05-2024 |
| | | | WO | 2023284644 A1 | 19-01-2023 |

EPO FORM P0459

For more details about this annex : see Official Journal of the European Patent Office, No. 12/82